# EUROPÄISCHE PATENTSCHRIFT

(11) **EP 0 518 166 B1**
(45) Veröffentlichungstag und Bekanntmachung des Hinweises auf die Patenterteilung: **16.08.1995**
(21) Anmeldenummer: 92109231.8
(22) Anmeldetag: 02.06.1992
(51) Int. Cl.: B62D 29/04, B62D 49/06, B62D 21/09, B62D 65/00

(54) **Rahmenteil, mit dem ein Bauteil verspannbar ist**
Frame element to which a component frame element is attachable
Partie de chassis à verrouillage avec un sous-ensemble porteur

(30) Priorität: 14.06.1991 US 715158
(43) Veröffentlichungstag der Anmeldung: 16.12.1992
(73) Patentinhaber: DEERE & COMPANY, Moline, Illinois 61265 (US)
(72) Erfinder: Hardesty, Terry Dean, Columbus, Wisconsin 53925 (US); Hutchison, Wayne Robert, Mayville, Wisconsin 53050 (US); Teal, Richard Donald, Horicon, Wisconsin 53032 (US); Patterson, Jon Michael, Wauwatosa, Wisconsin 53226 (US); Moore, Earl Thomas, Midland, Michigan 48640 (US); Coffey, Michael John, Sanford, Michigan 48657 (US); Hayes, Eugene Gary, Beaver Dam, Wisconsin 53916 (US)
(74) Vertreter: Feldmann, Bernhard

(56) Entgegenhaltungen:
- EP-A- 0 433 903
- WO-A-81/00831
- FR-A- 2 061 085
- GB-A- 1 072 807

## Beschreibung

Die Erfindung bezieht sich auf einen tragenden Fahrzeug-Rahmenteil, mit dem ein Bauteil über mindestens ein Anschlußmittel verspannbar ist, wozu in dem Rahmenteil und in dem Bauteil mindestens je eine Öffnung vorgesehen ist, die im zusammengebauten Zustand von Rahmenteil und Bauteil zueinander ausgerichtet sind.

Derartige Rahmenteile (US-A-4 679 382) bestehen aus Stahl und das Anschlußmittel aus einer Schraubverbindung. Beim Anziehen der Schrauben oder Muttern verformt sich der Rahmenteil nicht. Solche Rahmenteile lassen sich bei Fahrzeugen einsetzen, sind aber teuer in der Herstellung und haben ein beträchtliches Gewicht. Die Öffnungen zum Anschließen des Bauteiles werden in der Regel gebohrt.

Die mit der Erfindung zu lösende Aufgabe wird darin gesehen, den Rahmenteil leichter und kostengünstiger zu bauen und eine Befestigungsart für den Bauteil vorzusehen, die ein dauerhaftes und sicheres Verspannen des Bauteiles mit dem Rahmenteil erlaubt. Diese Aufgabe ist nach der Erfindung dadurch gelöst worden, daß der Rahmenteil zumindest im Bereich seiner Öffnung aus Kunststoff besteht und in der Öffnung des Rahmenteiles ein das Zusammendrücken des Rahmenteiles begrenzender Abstandshalter vorgesehen ist. Die Kunststoffbauweise verringert das Gewicht des Rahmens erheblich und ist zum Beispiel im Gießverfahren leicht herzustellen, wobei erforderliche Öffnungen im Gießverfahren direkt miteingebracht werden können. Kunststoffe oder ähnlich zusammengesetzte Werkstoffe verformen sich, wenn auf sie ein Druck ausgeübt wird. Je nach der Grenzbelastung des entsprechenden Werkstoffes kann es zu einem Fließen kommen oder bei sehr hohen Drücken zu einer bleibenden Verformung. Das Fließen ist von verschiedenen Faktoren, wie Dauer der Belastung, Grad der Belastung, der Temperatur usw. abhängig. Beim Verspannen kann durch das Quetschen das Material die Tendenz entwickeln, von der Verbindungsstelle fort gedrückt zu werden oder fort zu fließen. Der Rahmenteil würde an dieser Stelle weicher bzw. dünner mit der Folge, daß es nach längeren Einsatzzeiten zu einem Bruch kommt. Zumindest lockert sich die Verbindung. Um diesen oder ähnlichen Eigenschaften eines Kunststoffes entgegenzuwirken, ist nach der Erfindung der Abstandshalter vorgesehen, der eine dauerhafte Verspannung ermöglicht und so ausgebildet ist, daß der Rahmenteil an seiner Verbindungsstelle nur so belastet wird, daß eine betriebssichere Verbindung gegeben ist und der Rahmenteil nach dem Lösen der Verspannung, was zu Wartungszwecken erforderlich ist, wieder seine ursprüngliche Form einnimmt. Der Grad der Belastung ist damit limitiert, dennoch so groß, daß eine sichere Verbindung, auch wenn Vibrationen auftreten, gegeben ist. Eine sichere Verbindung wird noch dadurch verbessert, daß nach einer weiteren Maßnahme der Erfindung, der Abstandshalter derart ausgebildet ist, daß er im verspannten Zustand von Rahmenteil und Bauteil gegen den Bauteil gepreßt ist.

Um den beim Verspannen auf den aus Kunststoff gebildeten Rahmenteil einwirkenden Druck zu limitieren, kann nach der Erfindung ferner vorgesehen werden, daß der Abstandshalter eine Höhe aufweist, die geringfügig kleiner ist als die Stärke des Rahmenteiles im Bereich seiner Öffnung.

Der Abstandshalter kann ein gesonderter Bauteil, wie eine in die Öffnung des Rahmenteils einsetzbare Hülse sein. Doch wird es nach der Erfindung für einfacher gehalten, daß das Anschlußmittel eine Kopfschraube, eine erste Mutter und den Abstandshalter aufweist, wobei der Abstandshalter im verspannten Zustand von Rahmenteil und Bauteil von der Öffnung im Rahmenteil aufgenommen ist. Hierbei kann der Abstandshalter mit der Kopfschraube eine nicht lösbare Baueinheit bilden.

Damit die von der ersten Mutter herrührenden Spannkräfte besser in dem Rahmenteil verteilt werden, ist nach der Erfindung ferner noch vorgesehen, daß das Anschlußmittel eine Klemmplatte aufweist, die im verspannten Zustand von Rahmenteil und Bauteil an der dem Bauteil abgelegenen Seite des Rahmenteils auf dem Rahmenteil aufliegt, gegen den Abstandshalter anliegt und von der ersten Mutter gesichert ist, wobei der Kopf der Kopfschraube gegen den Bauteil anliegt.

Damit sich der Abstandshalter aber auch fest gegen den Bauteil pressen kann, ist außerdem nach der Erfindung vorgesehen, daß der Abstandshalter als zweite auf die Kopfschraube aufschraubbare Mutter ausgebildet ist, deren Höhe geringfügig kleiner ist als die Stärke des Rahmenteiles im Bereich seiner Öffnung.

Wenn nach der Erfindung der Bauteil ein Endgetriebe ist, das über die Kopfschraube und die zweite Mutter mit einer Befestigungsplatte verspannt ist, dient die zweite Mutter noch zum gegenseitigen Verspannen des Endgetriebes und des Bauteiles, so daß dies im verschraubten Zustand von dem Rahmenteil durch Lösen der ersten Mutter abnehmbar ist, was sich in bestimmten Einsatzfällen als besonders vorteilhaft erweist. Ein solcher Einsatz ist nach der Erfindung dann gegeben, wenn der Rahmenteil den Grundrahmen eines Fahrzeuges bildet. In einem derartigen Fall ist es weiter von Vorteil, wenn die Befestigungsplatte an ihrer dem Endgetriebe abgelegenen Seite mindestens ein weiteres Bauteil, wie einen Motor aufnehmen kann. Endgetriebe und Motor können dann als Einheit von dem Rahmenteil zu Wartungszwecken entfernt werden, wobei wiederum nur die erste Mutter eines jeden Anschlußmittels zu lösen ist.

In der Zeichnung ist ein nachfolgend näher erläutertes Ausführungsbeispiel der Erfindung dargestellt. Es zeigt:
- Fig. 1: ein Fahrzeug mit einem aus Kunststoff bestehenden Grundrahmen,
- Fig. 2: die Befestigungsart einer Modulbefestigungsplatte an den Grundrahmen in auseinandergezogener Darstellung und
- Fig. 3: einen Ausschnitt der Befestigung nach Fig. 2 im zusammengebauten Zustand.

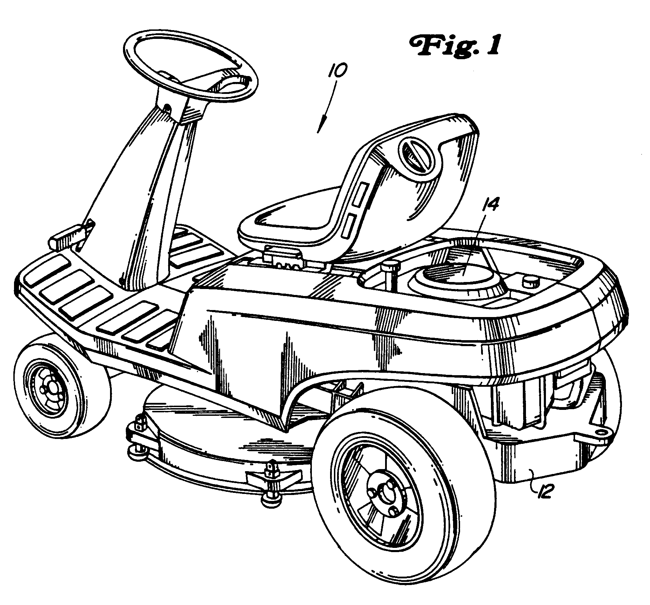

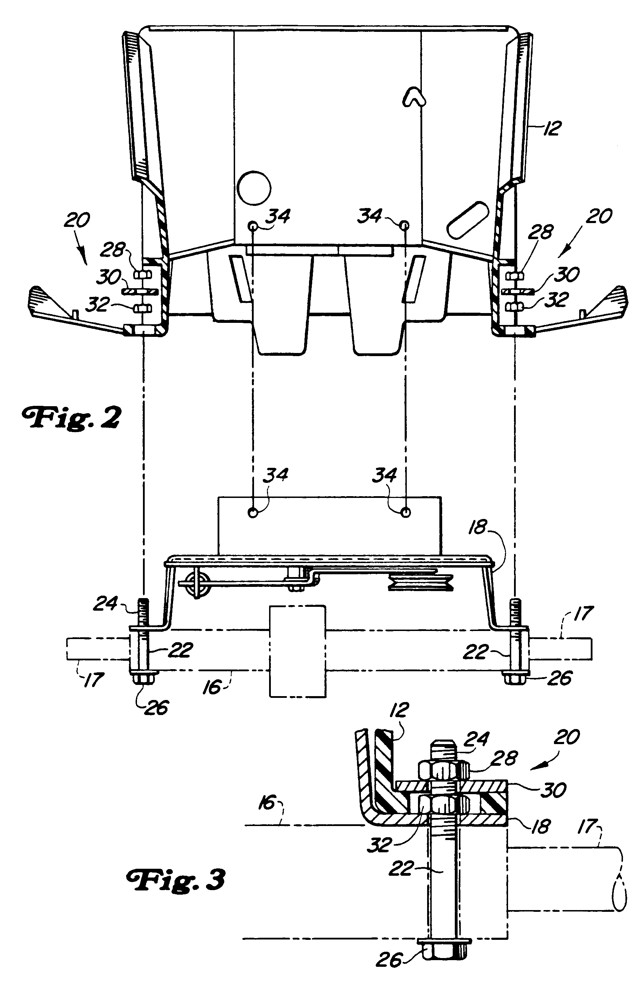

In Fig. 1 der Zeichnung ist ein Fahrzeug mit 10 bezeichnet, dessen Grundrahmen 12 aus Kunststoff oder gemischten Werkstoff hergestellt ist. Das Fahrzeug 10 ist mit einem Motor 14 und weiteren Komponenten, wie einem Endgetriebe 16 mit einer Achse 17 versehen. Aus Fig. 2 ist eine Modulbefestigungsplatte 18 erkennbar, mit der das Endgetriebe 16 von unten verschraubt ist.

Der Motor 14 sitzt oben auf der Modulbefestigungsplatte 18 auf und ist im eingebauten Zustand von einem Motorabteil, das am Grundrahmen 14 vorgesehen ist, aufgenommen. Die Modulbefestigungsplatte 18 wird zusammen mit dem Motor 14 und dem Endgetriebe 16 am rückwärtigen Ende des Fahrzeuges 10 derart angeschlossen, daß das rückwärtige Fahrzeugende von ihr aufgenommen und getragen wird, da auch die angetriebenen rückwärtigen Laufräder des Fahrzeuges 10 an das Endgetriebe 16 über dessen Achsen 17 angeschlossen werden. Zum Anschließen der Modulbefestigungsplatte 18 an das Fahrzeug 10 dienen Anschlußmittel 20, die im zusammengebauten Zustand auszugsweise in Fig. 3 wiedergegeben sind. Fig. 3 zeigt ein Spannmittel in Form einer Schraube 22, die einen oberen Gewindeteil 24 mit einem unteren Kopf 26 aufweist und die von entsprechenden Öffnungen in dem Endgetriebe 16, der Modulbefestigungsplatte 18 und in dem Grundrahmen 12 aufgenommen wird. Auf den Gewindeteil 24 einer jeden Schraube 22 ist jeweils eine erste und eine zweite Mutter 28 und 32 aufschraubbar. Beim Zusammenbau wird zunächst die Schraube 22 von unten in die Öffnungen in dem Endgetriebe 10 und in der Modulbefestigungsplatte 18 gesteckt und durch die Mutter 32 gesichert, die im angezogenen Zustand das Endgetriebe 16 mit der Modulbefestigungsplatte 18 fest verspannt. Der nach oben überstehende Schaftteil der Schraube 22 wird dann durch die Öffnung im Grundrahmen 12 geführt, die zweckmäßig in einem horizontalen Flanschteil des Grundrahmens vorgesehen ist. Jedenfalls sollen die entsprechenden Teile des Endgetriebes 16, der Modulbefestigungsplatte 18 und die des Grundrahmens 12 satt gegeneinander anliegen. Ist die Schraube 22 durch die Öffnung im Grundrahmen 12 geführt, so wird noch eine Klemmplatte 30 auf die Schraube 22 gesetzt, die auf der der Modulbefestigungsplatte abgelegenen Seite auf dem Grundrahmen 12 bzw. dessen Flanschteil aufliegt. Danach wird die erste Mutter 32 aufgeschraubt und fest angezogen, so daß die Modulbefestigungsplatte 18 mit dem bereits angeschraubten Endgetriebe 16 mit dem Grundrahmen 12 fest verspannt ist. Die Klemmplatte 30, der Grundrahmen 12, die zweite Mutter 32, die Modulbefestigungsplatte 18 und das Endgetriebe 16 sind dann fest zwischen der ersten Mutter 28 und dem Kopf 26 der Schraube 22 zusammengespannt.

Die Öffnung im Grundrahmen 12 braucht nur so groß zu sein, daß sie die zweite Mutter 32 aufnehmen kann, da sie, wenn sie eingesetzt wird, bereits fest angezogen ist und zwischen sich und dem Kopf 26 der Schraube 22 die Modulbefestigungsplatte 18 und das Endgetriebe 16 verspannt. Das Endgetriebe und selbstverständlich aber auch die Modulbefestigungsplatte können aus einem metallischen Werkstoff bestehen. Zu Wartungsarbeiten kann die Modulbefestigungsplatte 18 mit dem angeschraubten Endgetriebe 16 und gegebenenfalls mit dem auf ihr aufgeschraubten Motor 14 als Einheit von dem Grundrahmen abgeschraubt werden. Hierzu wird, nachdem Verbindungsleitungen und zugehörige Gestänge gelöst wurden, die erste Mutter 28 von der Schraube 22 abgeschraubt und die Klemmplatte 30 gegebenenfalls entfernt. Der Grundrahmen 12 kann dann nach oben von der Modulbefestigungsplatte 18 abgehoben werden. Die zweite Mutter 32 bleibt dabei fest verschraubt, um Modulplatte 18 und Endgetriebe 16 fest zusammenhalten zu können. Die dann von dem Grundrahmen 12 gelöste Einheit stützt sich auf dem Boden über die an dem Endgetriebe vorgesehen Laufräder ab. Das Hochheben des Grundrahmens ist leicht, da er aus Kunststoff besteht.

Die zweite Mutter 32 dient außerdem als Abstandshalter und verhindert, daß der Grundrahmen 12 überbeansprucht und zu sehr zusammengepreßt wird, wenn die Modulbefestigungsplatte 18 an ihm angeschlossen ist. Wie bereits vorstehend ausgeführt wurde, wird die zweite Mutter 32 im zusammengebauten Zustand in der hierzu vorgesehenen Öffnung am Grundrahmen 12 aufgenommen und liegt dann gegen die Modulbefestigungsplatte 18 an. Dabei ist die Höhe der zweiten Mutter 32 etwas kleiner als die Stärke des Grundrahmens 12 im Bereich dieser Anschlußstelle. Wenn die erste Mutter 28 fest auf ihrer Schraube 22 angezogen ist, dann wird die Klemmplatte 30 auf den Kunststoff des Grundrahmens 12 gepreßt, wodurch der Kunststoff des Grundrahmens 12 soweit zusammengepreßt wird, bis die Klemmplatte 30 auf die zweite Mutter 32 zum Aufliegen kommt. Beim Aufliegen der Klemmplatte 30 auf der zweiten Mutter 32 wird ein weiteres Zusammenpressen des Grundrahmens in diesem Bereich zwischen Klemmplatte und Modulbefestigungsplatte verhindert. Die Höhe der zweiten Mutter 32 ist daher dafür maßgebend, in welchem Maße ein Zusammendrücken des Materials des Grundrahmens erfolgt. Im fest verspannten Zustand sollen dann aber die auf den Kunststoff wirkenden Kräfte nicht so groß sein, daß eine bleibende Verformung eintritt. Der Kunststoff soll seine Elastizität nicht verlieren, und nach dem Lösen der ersten Mutter 28 soll der Grundrahmen seine frühere Form wieder einnehmen, d. h. der Kunststoff soll in seine frühere Form oder auf seine ursprüngliche Stärke zurückspringen. Des weiteren begrenzt die zweite Mutter 32 die Spannungen in dem plastischen Werkstoff in einem solchen Maße, daß zu große Beanspruchungen und ein Kriechen des Materials vermieden werden. Damit ist das Anschlußmittel 20 derart ausgebildet, daß der zusammengepreßte Werkstoff des Grundrahmens im Bereich seiner Verbindungsstelle nicht kriecht oder fließt oder sogar soweit nach außen gequetscht wird, daß der Halt zwischen Klemmplatte und Modulbefestigungsplatte verloren gehen könnte. Auch treten keine Ermüdungserscheinungen des Plastikmaterials auf. Die Anschlußmittel erlauben eine dauerhafte Verbindung von Grundrahmen und Modulbefestigungsplatte, bei der das Material des Grundrahmens nicht überbeansprucht wird.

Die erste Mutter 28 kann entfernt werden von ihrer zugehörigen Schraube, damit der Motor 14 oder das Endgetriebe 16 zu Wartungszwecken entfernt werden können. Zum Wiederanbau des Motors und des Endgetriebes an den Grundrahmen 12 werden die ersten Muttern auf die zugehörigen Schrauben 22 wieder aufgeschraubt. Die Wartungsperson kann beim Wiedereinbau der Komponenten 14 und 16 die erste Mutter 28 infolge der nach dem bevorzugten Ausführungsbeispiel vorgesehenen Maßnahmen nicht überdrehen.

Das bevorzugte Ausführungsbeispiel sieht im einzelnen zwei Anschlußmittel 20 vor, und zwar jeweils eins an jeder Längsseite des Fahrzeuges 10 im Bereich der Achsen 17. Jedes Anschlußmittel 20 kann zwei mit Längsabstand zueinander angeordnete Schrauben 22 beiderseits der Achse 17 aufweisen, aber nur eine einzige Klemmplatte 30 an jeder Seite. Zusätzlich kann die Modulbefestigungsplatte 18 an zwei frontseitig vorgesehenen Stellen 34 mit dem Grundrahmen 12 verbunden werden. Diese Befestigungen können wie die Anschlußmittel 20 ausgebildet sein, um Biegebeanspruchungen auffangen zu können.

## Patentansprüche

1. Tragender Fahrzeug-Rahmenteil, mit dem ein Bauteil über mindestens ein Anschlußmittel (20) verspannbar ist, wozu in dem Rahmenteil (12) und in dem Bauteil mindestens je eine Öffnung vorgesehen ist, die im zusammengebauten Zustand von Rahmenteil (12) und Bauteil zueinander ausgerichtet sind, dadurch gekennzeichnet, daß der Rahmenteil (12) zumindest im Bereich seiner Öffnung aus Kunststoff besteht und in der Öffnung des Rahmenteiles (12) ein das Zusammendrücken des Rahmenteiles (12) begrenzender Abstandshalter vorgesehen ist.

2. Rahmenteil nach Anspruch 1, dadurch gekennzeichnet, daß der Abstandshalter derart ausgebildet ist, daß er im verspannten Zustand von Rahmenteil (12) und Bauteil gegen den Bauteil gepreßt ist.

3. Rahmenteil nach Anspruch 1, dadurch gekennzeichnet, daß der Abstandshalter eine Höhe aufweist, die geringfügig kleiner ist als die Stärke des Rahmenteiles (12) im Bereich seiner Öffnung.

4. Rahmenteil nach einem oder mehreren der vorherigen Ansprüche, dadurch gekennzeichnet, daß das Anschlußmittel (20) eine Kopfschraube (22), eine erste Mutter (28) und den Abstandhalter aufweist, wobei der Abstandshalter im verspannten Zustand von Rahmenteil (12) und Bauteil von der Öffnung im Rahmenteil (12) aufgenommen ist.

5. Rahmenteil nach Anspruch 4, dadurch gekennzeichnet, daß das Anschlußmittel (20) ferner eine Klemmplatte (30) aufweist, die im verspannten Zustand von Rahmenteil (12) und Bauteil an der dem Bauteil abgelegenen Seite des Rahmenteils (12) auf dem Rahmenteil (12) aufliegt, gegen den Abstandshalter anliegt und von der ersten Mutter (28) gesichert ist, wobei der Kopf (26) der Kopfschraube (22) gegen den Bauteil anliegt.

6. Rahmenteil nach Anspruch 4 oder 5, dadurch gekennzeichnet, daß der Abstandshalter als zweite auf die Kopfschraube (22) aufschraubbare Mutter (32) ausgebildet ist, deren Höhe geringfügig kleiner ist als die Stärke des Rahmenteiles im Bereich seiner Öffnung.

7. Rahmenteil nach einem oder mehreren der vorherigen Ansprüche, dadurch gekennzeichnet, daß der Bauteil ein Endgetriebe (16) ist, das über die Kopfschraube (22) und die zweite Mutter (32) mit einer Befestigungsplatte (18) verspannt ist.

8. Rahmenteil nach Anspruch 7, dadurch gekennzeichnet, daß die Befestigungsplatte (18) an ihrer dem Endgetriebe abgelegenen Seite mindestens ein weiteres Bauteil aufnehmen kann.

9. Rahmenteil nach einem oder mehreren der vorherigen Ansprüche, dadurch gekennzeichnet, daß der Rahmenteil den Grundrahmen (12) eines Fahrzeuges bildet.

## Claims

1. A load carrying vehicle frame part, to which a component can be tightened via at least one connecting means (20), wherefor at least one opening is provided in each of the frame part (12) and the component, the openings being aligned with one another in the assembled state of the frame part (12) and component, characterized in that the frame part (12) consists of plastics material, at least in the region of its opening and a spacer is provided in the opening in the frame part (12) to limit the compression of the frame part (12).

2. A frame part according to claim 1, characterized in that the spacer is so formed that it is pressed against the component in the tightened state of the frame part (12) and the component.

3. A frame part according to claim 1, characterized in that the spacer has a height which is slightly less than the thickness of the frame part (12) in the region of its opening.

4. A frame part according to one or more of the preceding claims, characterized in that the connecting means (20) comprise a headed bolt (22), a first nut (28) and the spacer, wherein the spacer is received by the opening in the frame part (12) in the tightened state of the frame part (12) and component.

5. A frame part according to claim 4, characterized in that the connecting means (20) further comprise a clamping plate (30), which bears in the tightened state of the frame part (12) and component on the side of the frame part (12) facing away from the component, and abuts the spacer and which is secured by the first nut (28), wherein the head (26) of the headed bolt (22) bears against the component.

6. A frame part according to claim 4 or 5, characterized in that the spacer is formed by a second nut (32) which can be screwed on to the headed bolt (22) and whose height is slightly less than the thickness of the frame part in the region of its opening.

7. A frame part according to one or more of the preceding claims, characterized in that the component is a transaxle (16), which is tightened on to an attachment plate (18) by means of the headed bolt (22) and the second nut (32).

8. A frame part according to claim 7, characterized in that the attachment plate (18) can receive at least one further component on its side facing away from the transaxle.

9. A frame part according to one or more of the preceding claims, characterized in that the frame part forms the base frame (12) of a vehicle.

## Revendications

1. Partie de châssis porteur de véhicule, au moyen duquel un composant peut être fixé par serrage par l'intermédiaire d'au moins un moyen de raccordement (20), au moins une ouverture respective étant prévue à cet effet dans la partie de châssis (12) et dans le composant, ces ouvertures étant alignées l'une sur l'autre lorsque la partie de châssis (12) et le composant sont assemblés, caractérisée en ce que la partie de châssis (12) est réalisée en matière plastique au moins au niveau de son ouverture, et une entretoise limitant la compression de la partie de châssis (12) est prévue dans l'ouverture de cette dernière (12).

2. Partie de châssis selon la revendication 1, caractérisée en ce que l'entretoise est agencée de telle sorte qu'elle est repoussée contre le composant, lorsque la partie de châssis (12) et le composant sont à l'état serré.

3. Partie de châssis selon la revendication 1, caractérisée en ce que l'entretoise possède une hauteur qui est légèrement inférieure à l'épaisseur de la partie de châssis (12) au niveau de son ouverture.

4. Partie de châssis selon une ou plusieurs des revendications précédentes, caractérisé en ce que le moyen de raccordement (20) possède un boulon à tête (22), un premier écrou (28) et l'entretoise, l'entretoise étant logée dans l'ouverture ménagée dans la partie de châssis (12) lorsque cette dernière et le composant sont à l'état serré.

5. Partie de châssis selon la revendication 4, caractérisée en ce que le moyen de raccordement (20) possède en outre une plaque de serrage (30), qui, lorsque la partie de châssis (12) et le composant sont à l'état serré, s'applique sur la partie de châssis (12), contre la face de la partie de châssis (12) tournée à l'opposé du composant, s'applique contre l'entretoise et est bloquée par le premier écrou (28), la tête (26) du boulon de tête (22) s'appliquant contre le composant.

6. Partie de châssis selon la revendication 4 ou 5, caractérisée en ce que l'entretoise est agencée sous la forme d'un second écrou (32) pouvant être vissé sur la tête de boulon (22) et dont la hauteur est légèrement inférieure à l'épaisseur de la partie de châssis au niveau de son ouverture.

7. Partie de châssis selon une ou plusieurs des revendications précédentes, caractérisée en ce que le composant est un mécanisme terminal (16), qui est serré par l'intermédiaire du boulon de tête (22) et du second écrou (32) contre une plaque de fixation (18).

8. Partie de châssis selon la revendication 7, caractérisée en ce que la plaque de fixation (18) peut recevoir au moins un autre composant, sur sa face tournée vers le mécanisme final.

9. Partie de châssis selon une ou plusieurs des revendications précédentes, caractérisée en ce que la partie de châssis forme le châssis de base (12) d'un véhicule automobile.
